Europäisches Patentamt

European Patent Office

Office européen des brevets

(11) Veröffentlichungsnummer : **0 451 330 B1**

(19)

(12) **EUROPÄISCHE PATENTSCHRIFT**

(45) Veröffentlichungstag der Patentschrift :
21.09.94 Patentblatt 94/38

(51) Int. Cl.⁵ : **G12B 13/00**, G01D 5/26

(21) Anmeldenummer : **90120975.9**

(22) Anmeldetag : **02.11.90**

(54) **Verfahren zur selbsttätigen Eichung oder Nacheichung von Messungen einer physikalischen Grösse.**

(30) Priorität : **28.03.90 CH 1030/90**

(43) Veröffentlichungstag der Anmeldung :
**16.10.91 Patentblatt 91/42**

(45) Bekanntmachung des Hinweises auf die
Patenterteilung :
**21.09.94 Patentblatt 94/38**

(84) Benannte Vertragsstaaten :
**AT BE CH DE DK ES FR GB GR IT LI LU NL SE**

(56) Entgegenhaltungen :
**EP-A- 0 184 632
WO-A-87/01446
US-A- 3 937 574
US-A- 4 576 035**

(56) Entgegenhaltungen :
**APPLIED OPTICS, Band 28, Nr. 3, 1. Februar
1989; "Loss compensated fiber-optic displacement including a lens"
ZARUBEZHNAYA RADIOELEKTRON, Nr. 7,
1980, Seiten 65-66, E.A. ZAK et al
WPIL, FILE SUPPLIER, AN=84-268377, Derwent Publications, Ltd, London, GB; & SU-A-1
076 764**

(73) Patentinhaber : **Landis & Gyr Business
Support AG
CH-6301 Zug (CH)**

(72) Erfinder : **Radivoje, Popovic
Fridbach 1
CH-6300 Zug (CH)**
Erfinder : **Beat, Hälg
Allmendweg 7
CH-6330 Cham (CH)**

## Beschreibung

Die Erfindung bezieht sich auf ein verfahren zur selbsttätigen Eichung oder Nacheichung von Messungen einer physikalischen Grösse gemäss dem Oberbegriff des Anspruchs 1 und auf eine Anordnung zur Durchführung des Verfahrens.

Solche Verfahren eignen sich beispielsweise zur Messung von Abständen, Magnetfeldern, Druckunterschieden, usw., wenn die Ausgangskennlinie des für die Messung verwendeten Sensors nicht linear ist und entweder von Anfang an unbekannt oder unstabil ist, so dass sie sich im letzteren Fall, obwohl ursprünglich bekannt, inzwischen in Funktion der Zeit, der Temperatur oder einer anderen Grösse auf unbekannte Weise so geändert hat, dass sie erneut unbekannt ist und nachgeeicht werden muss. Gemessen werden bei dem verfahren Werte einer Funktion f[x] der Werte x einer physikalischen Grösse. Gesucht werden jedoch nicht die Werte der Funktion f[x], sondern die Werte $x=f^{-1}[x]$ der physikalischen Grösse, was nur möglich ist, wenn die Ausgangskennlinie des verwendeten Sensors bekannt ist bzw. sich selbsttätig eicht oder nacheicht.

Bei üblichen, nicht selbsttätigen Eichungen eines für eine Messung verwendeten Sensors werden bekanntlich für jeden Wert der zu messenden physikalischen Grösse x Punkt für Punkt die zugehörigen Werte des Ausgangssignals f[x] des Sensors mittels eines nach Möglichkeit präzisen Messgerätes ermittelt. Nacheichungen oder Kalibrierungen sind dann meistens von Zeit zu Zeit z. B. in bestimmten Zeitintervallen erforderlich.

Ein verfahren der im Oberbegriff des Anspruchs 1 genannten Art ist aus der Druckschrift "Applied Optics, 1 Februar 1989, Vol. 28, No. 3, Seiten 419 bis 420, Loss compensated fiber-optic displacement sensor including a lens, E. Bois, S.J. Huard und G. Boisde" bekannt, in der ein selbstkalibrierender und verlustkompensierender optischer Abstandssensor beschrieben ist. Der Abstandssensor enthält dabei zum Zweck der Selbstkalibrierung zwei Lichtleiter, deren erste Enden axial gegeneinander verschoben und gegenüber einer lichtreflektierenden Fläche eines beweglichen Körpers angeordnet sind, der sich entlang der optischen Achse der Lichtleiter fortbewegt. Das zweite Ende eines jeden Lichtleiters ist abwechselnd an einer Leuchtdiode oder an einer Phototodiode angeschlossen. Jede Leuchtdiode sendet Licht aus und wird abwechselnd erregt, um zwei durch die Photodioden anschliessend detektierte Signale mittels eines Mikrocomputers auszuwerten. Das gesendete Licht erreicht über den zugehörigen Lichtleiter die lichtreflektierende Fläche und das reflektierte Licht anschliessend über Lichtleiter die Photodioden, deren Ausgangssignale dem Mikrocomputer zugeführt werden. Der Mikrocomputer hält seinerseits über einen Digital/Analog-Wandler das durch die Leuchtdiode gesendete Referenzsignal konstant und kalibriert die Messanordnung, indem er das Verhältnis der Summe und der Differenz der beiden detektierten Signale bildet und auswertet. Das Verhältnis ist in der Nähe des Nullpunktes proportional zum gesuchten Wert des Abstandes, wenn für die Sensoren eine Anwesenheit parabolischer Ausgangskennlinien angenommen wird.

Der Erfindung liegt die Aufgabe zugrunde, unter Verwendung zweier annähernd identischer Sensoren ein Verfahren der eingangs genannten Art zu finden, welches es gestattet, ohne grosse Anforderungen an die Gestalt der Ausgangskennlinien der Sensoren und ohne weitere grosse einschränkende Bedingungen, die Ausgangskennlinie eines ersten der beiden Sensoren mit Hilfe der Messresultate des zweiten Sensors zu eichen oder nachzueichen.

Die genannte Aufgabe wird erfindungsgemäss durch die im Kennzeichen des Anspruchs 1 angegebenen Merkmale gelöst.

Vorteilhafte Ausgestaltungen der Erfindung ergeben sich aus den Unteransprüchen.

Ausführungsbeispiele der Erfindung sind in der Zeichnung dargestellt und werden im folgenden näher beschrieben.

Es zeigen:

Fig. 1    einen prinzipiellen Aufbau einer Abstands-Messanordnung zur Durchführung des erfindungsgemässen Verfahrens,

Fig. 2    einen prinzipiellen Aufbau einer optischen Abstands-Messanordnung zur Durchführung des erfindungsgemässen Verfahrens,

Fig. 3    einen prinzipiellen Aufbau einer Magnetfeld-Messanordnung zur Durchführung des erfindungsgemässen Verfahrens,

Fig. 4    einen Teilmessbereich der Ausgangskennlinie zweier für das erfindungsgemässe Verfahren verwendeter Sensoren,

Fig. 5    eine aus mehreren Teilmessbereichen bestehende Ausgangskennlinie zweier für das erfindungsgemässe Verfahren verwendeter Sensoren und

Fig. 6    ein Flussdiagramm eines Programms eines für das erfindungsgemässe Verfahren verwendeten Rechners.

Gleiche Bezugszahlen bezeichnen in allen Figuren der Zeichnung gleiche Teile.

Die in der Zeichnung dargestellten Anordnungen enthalten jeweils einen ersten Sensor 1, einen zweiten Sensor 2, einen Rechner 3 und eine Anzeige 4, die zusammen in einer Messanordnung 5 enthalten sind.

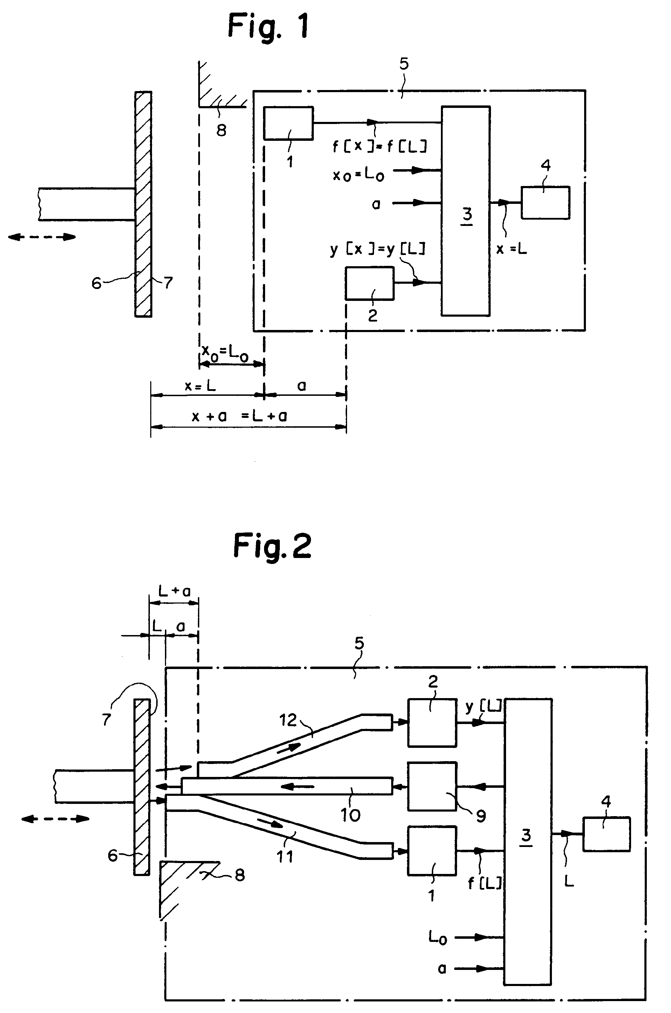

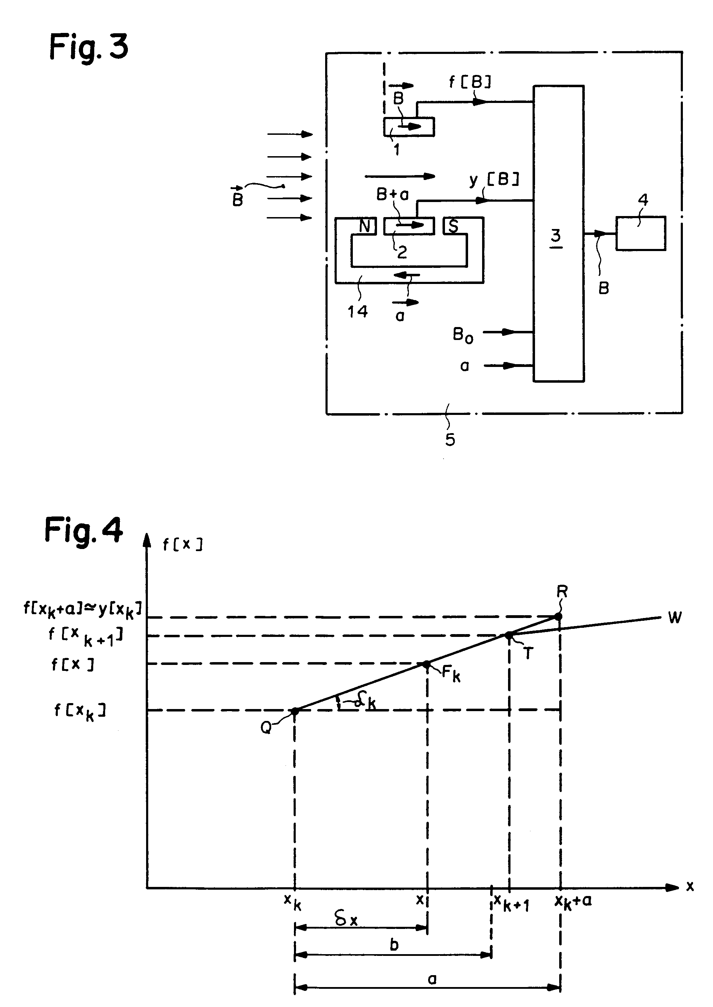

Die Werte einer beliebigen zu messenden physikalischen Grösse werden nachfolgend mit x bezeichnet. In den Figuren 1 und 2 gilt die Annahme, dass die physikalische Grösse ein räumlicher Abstand zwischen einem beweglichen Körper 6, der seinerseits eine Frontfläche 7 aufweist, und einer wirksamen Frontfläche des Sensors 1 ist, dessen Werte mit L bezeichnet sind, so dass $x=L$ gilt. In der Fig. 3 wird als physikalische Grösse eine magnetische Induktion B gemessen, so dass $x=B$ gilt.

Die beiden Sensoren 1 und 2 ermitteln Werte x der gleichen physikalischen Grösse. Der Sensor 1 besitzt ein Ausgangssignal $f[x]$ und der Sensor 2 ein Ausgangssignal $g[x]$, die beide je eine Funktion der Werte x der physikalischen Grösse sind. Die beiden Sensoren 1 und 2 sind annähernd identisch aufgebaut, so dass ihre Ausgangssignale $f[x]$ und $g[x]$ in Funktion der Werte x der physikalischen Grösse einen annähernd gleichen, jedoch zu Beginn unbekannten Verlauf besitzen. Die beiden Ausgangskennlinien der Sensoren 1 und 2, in denen die Werte x jeweils als Abszissenwerte aufgetragen sind, sind dabei, wie bereits erwähnt, entweder unbekannt, oder, falls sie einmal bekannt waren, inzwischen unbekannt geworden, da sie unstabil sind.

In der Messanordnung ermitteln die beiden Sensoren 1 und 2 Werte der physikalischen Grösse, welche sich durch einen vorgegebenen konstanten Differenzwert a der physikalischen Grösse voneinander unterscheiden. Für Werte x der mittels der Anordnung zu messenden physikalischen Grösse besitzt also der Sensor 1 ein Ausgangssignal $f[x]$ und der Sensor 2 ein Ausgangssignal $y[x]=g[x+a]\approx f[x+a]$. Der Differenzwert a wird im Rechner 3 gespeichert.

Die Ausgänge der beiden Sensoren 1 und 2 sind je mit einem Eingang des Rechners 3 verbunden, so dass letzterer die Ausgangssignale $f[x]$ und $y[x]$ der beiden Sensoren 1 und 2 als Messdaten empfängt, die er auswertet, um aus ihnen den gesuchten Wert x der physikalischen Grösse zu ermitteln. Der ermittelte Wert x wird anschliessend zwecks weiterer Auswertung oder Anzeige einem Ausgang des Rechners 3 zugeführt. Vom Ausgang des Rechners 3 erreicht der ermittelte Wert x der physikalischen Grösse z. B. dann einen Eingang der Anzeige 4, in der er angezeigt wird.

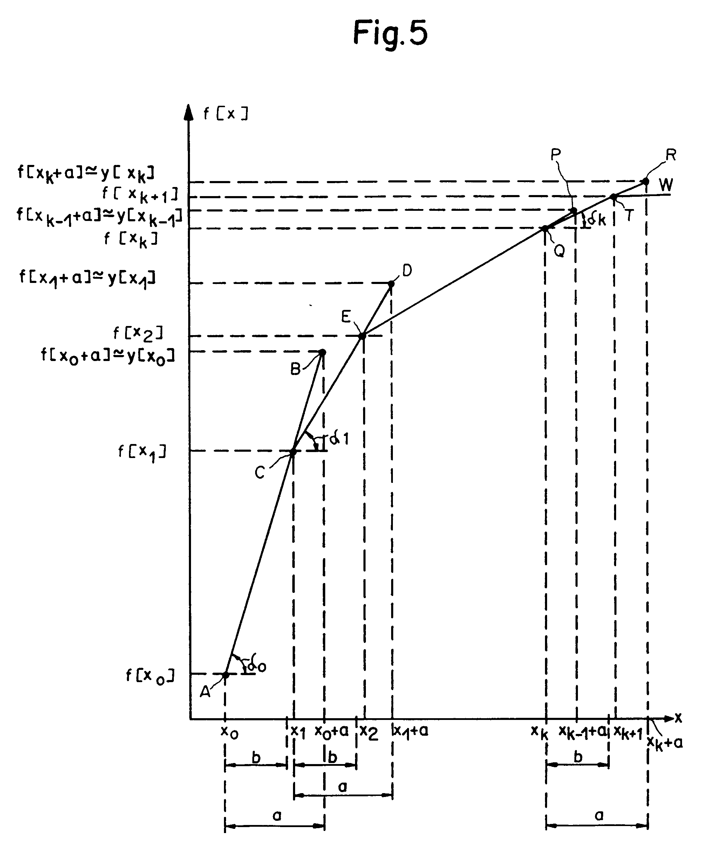

Ein beliebiger Anfangswert $x_o$ des Wertes x der physikalischen Grösse ist bekannt, sei es, dass er vorgegeben ist, sei es, dass er zu Beginn der Messungen mit einem Präzisionsmessgerät ermittelt wurde. Zum Anfangswert $x_o$ gehört ein Wert $f[x_o]$ des Ausgangssignals $f[x]$ des Sensors 1. Die Werte von $f[x_o]$ und $x_o$ werden im Rechner 3 gespeichert und stellen die Koordinatenwerte eines Anfangspunktes A (siehe Fig. 5) der Ausgangskennlinie der Sensoren 1 und 2 dar.

Mindestens die Ausgangskennlinie des Sensors 1 wird in Teilmessbereichen unterteilt, die mit laufenden Nummern k versehen sind, wobei k gleich 0, 1, 2, 3, usw. ist. Die in Richtung der Abszissenwerte gemessene Breite der Teilmessbereiche wird gleichgross gewählt wie der vorgegebene konstante Differenzwert a in den von den Sensoren 1 und 2 ermittelten Werten der physikalischen Grösse x. Die Messresultate des Sensors 2 dienen ausschliesslich dazu im Verlaufe der Messungen, ausgehend von den bekannten Koordinatenwerten $f[x_o]$ und $x_o$ des Anfangspunktes A der Ausgangskennlinie des Sensors 1, ein bekannter Teil dieser Ausgangskennlinie in Richtung steigender Werte x der physikalischen Grösse durch neue, bekannte Teilmessbereiche immer mehr zu erweitern, wobei zwei benachbarte bekannte Teilmessbereiche sich jeweils mindestens für einen Abszissenwert der Ausgangskennlinie, d. h. für einen Wert $x_k$ der physikalischen Grösse, überlappen. Der Sensor 2 übernimmt so selbsttätig und gezielt die Eichung bzw. Nacheichung der Messungen des Sensors 1, indem er laufend den bekannten Kennlinienbereich des Sensors 1 erweitert und der Sensor 1 somit seine eigene Ausgangskennlinie kennenlernt. Der Sensor 1 ermittelt dabei jeweils den gesuchten Wert x der physikalischen Grösse immer nur in solchen Teilmessbereichen seiner Ausgangskennlinie, in denen die Werte der Ausgangskennlinie bereits mit Hilfe der Messresultate des Sensors 2 ermittelt wurden.

In der Darstellung der Fig. 1 sind die beiden Sensoren 1 und 2 in einem Abstand a, parallel zur Richtung des Abstandes $x=L$ gemessen, montiert, so dass der Abstand der wirksamen Frontfläche des Sensors 2 zur Frontfläche 7 des beweglichen Körpers 6 einen Wert $x+a=L+a$ besitzt. Der Abstand zwischen der Frontfläche 7 und einem mechanischen Anschlag 8 des beweglichen Körpers 6 besitzt, wieder parallel zur Richtung des Abstandes $x=L$ gemessen, einen bekannten Anfangswert $x_o=L_o$, der z. B. Null ist, wenn sich zu Beginn die Frontfläche 7 des beweglichen Körpers 6 in Kontakt mit dem mechanischen Anschlag 8 befindet. Die Messanordnung 5 besteht in der Fig. 1 aus den beiden Sensoren 1 und 2, dem Rechner 3 und der Anzeige 4.

In der Fig. 2 ist eine optische Ausführungsvariante der in der Fig. 1 dargestellten Abstands-Messanordnung dargestellt. Die Frontfläche 7 des beweglichen Körpers 6 ist in diesem Fall vorzugsweise eine reflektierende Fläche, die von einem Lichtsender 9 über einen ersten Lichtleiter 10 mit sichtbarem oder unsichtbarem Licht bestrahlt wird. Der Lichtsender 9 ist z. B. eine von einem Strom gespeiste Leuchtdiode, die über den Rechner 3 gesteuert oder gespeist wird. Die Frontfläche 7 befindet sich in einem Abstand L bzw. L+a von den Frontflächen zweier weiterer Lichtleiter 11 und 12, deren Frontflächen, parallel zur Richtung des Abstandes L gemessen, um einen Abstand a gegeneinander verschoben angeordnet sind. Die beiden Lichtleiter 11 und 12 verlaufen z. B. zuerst parallel und in Kontakt mit dem Lichtleiter 10, um sich anschliessend von diesem zu entfernen zwecks eines senkrechten Anschlusses an einer Frontfläche eines der beiden Sensoren 1 oder 2, die beide z. B. Photodioden sind. Der Lichtleiter 11, dessen Frontfläche sich in einem Abstand L von der Frontfläche 7 befindet, ist am Sensor 1 angeschlossen, während der Lichtleiter 12 am Sensor 2 angeschlossen ist. Die der Frontfläche 7 zugewandten Frontflächen der Lichtleiter 11 und 12 stellen die wirksamen Frontflächen der beiden Sensoren 1 und 2 dar. Die beiden Sensoren 1 und 2, der Rechner 3, die Anzeige 4, der Lichtsender 9 und die drei Lichtleiter 10 bis 12 bilden in der Darstellung der Fig. 2 die Messanordnung 5.

In der in der Fig. 3 dargestellten Magnetfeld-Messanordnung, die hauptsächlich aus einer Messanordnung 5 besteht, wird eine magnetische Induktion B gemessen. Die Messanordnung 5 besteht dabei aus den beiden Sensoren 1 und 2, dem Rechner 3, der Anzeige 4 und einem Permanentmagneten 14. Die Sensoren 1 und 2 sind diesmal vorzugsweise Hallelemente, die beide mit einem gleichen und konstanten Strom gespeist werden. Der Sensor 1 misst nur die magnetische Induktion B, während der Sensor 2 eine magnetische Induktion B+a misst, wobei eine kleine Differenzinduktion a durch den Permanentmagneten 14 erzeugt wird. Beim Permanentmagneten 14 ist der Nordpol mit N und der Südpol mit S bezeichnet. Der Permanentmagnet 14 ist räumlich so angeordnet, dass die zu messende magnetische Induktionen B und die magnetische Differenzinduktion a des Permanentmagneten 14 sich addieren. Der Sensor 2 ist in einem Luftspalt des Permanentmagneten 14 angeordnet und misst die Summe B+a der beiden magnetischen Induktionen B und a. In der Darstellung der Fig. 3 gelten somit: $x=B$, $x+a=B+a$ und $x_o=B_o$. Vorzugsweise wird $x_o=B_o=0$ gewählt z. B. durch ein Abschalten der zu messenden Induktion zu Beginn des Verfahrens.

In den Figuren 1 bis 3 ist das Abspeichern des Anfangswertes $x_o=L_o$ bzw. $x_o=B_o$ und des Differenzwertes a im Rechner 3 symbolisch dargestellt, indem diese Werte auf je einen Eingang des Rechners 3 geführt sind.

Statt der beschriebenen optischen und magnetischen Lösungen können jeweils auch akustische, pneumatische oder MikrowellenLösungen verwendet werden, wobei dann die Sensoren 1 und 2 durch entsprechende akustische, pneumatische oder Mikrowellen-Sensoren zu ersetzen sind.

In der Fig. 4 ist das Ausgangssignal f[x] des Sensors 1 in Funktion der Werte x der zu messenden physikalischen Grösse innerhalb eines Teilmessbereichs dargestellt, der eine beliebige laufende Nummer k besitzt. Der Teilmessbereich weist in Richtung der Abszissenwerte eine Breite auf, die gleich gross ist wie der bekannte vorgegebene Differenzwert a der physikalischen Grösse. Der Differenzwert a wird jeweils so klein gewählt, dass innerhalb eines jeden Teilmessbereichs ein zugehöriger Teil der Ausgangskennlinie des Sensors 1 als linear verlaufend angenommen werden kann. Innerhalb des in der Fig. 4 dargestellten Teilmessbereichs besitzt ein Anfangspunkt Q des zugehörigen linearen Teils der Ausgangskennlinie die Koordinatenwerte $f[x_k]$ und $x_k$, während ein Endpunkt R des linearen Teils die Koordinatenwerte $f[x_k+a] \approx g[x_k+a]=y[x_k]$ und $x_k+a$ aufweist. Zwischen den beiden Punkten Q und R verläuft der zum betreffenden Teilmessbereich gehörende Teil QR der Ausgangskennlinie des Sensors 1 linear, so dass für jeden Messpunkt $F_k$, der auf diesem Teil QR der Ausgangskennlinie liegt und die Koordinatenwerte f[x] und x besitzt, der Abszissenwert x, der dem gesuchten Wert x der physikalischen Grösse entspricht, durch lineare Extrapolation mittels der Formeln $x=x_k+\delta x$ und $\delta x=\{f[x]-f[x_k]\}/tg\,\alpha_k$ ermittelt werden kann, wobei $tg\,\alpha_k=\{f[x_k+a]-f[x_k]\}/a \approx \{y[x_k]-f[x_k]\}/a$ die Neigung des zugehörigen linearen Teils der Ausgangskennlinie darstellt.

Solange die Differenz $\delta x$ zwischen dem gerade ermittelten Wert der gesuchten physikalischen Grösse und dem im geltenden Teilmessbereich, der z. B. eine laufende Nummer k besitzt, vorhandenen niedrigsten Wert $x_k$ grösser als Null und kleiner einem vorgegebenen konstanten Wert b ist, erfolgt keine Umschaltung auf einen anderen Teilmessbereich. Der vorgegebene konstante Wert b wird kleiner gewählt als der vorgegebene konstante Differenzwert a der physikalischen Grösse und im Rechner 3 gespeichert. Erreicht oder überschreitet ein positiver Wert der Differenz $\delta x$ jedoch, wie z. B. beim Messpunkt T, den vorgegebenen konstanten Wert b, dann erfolgt immer eine Umschaltung von dem gerade geltenden Teilmessbereich auf einen benachbarten höheren Teilmessbereich.

Ist der Wert der Differenz $\delta x$ positiv und grösser oder gleich dem vorgegebenen konstanten Wert b, dann wird jeweils auf einen neuen benachbarten Teilmessbereich umgeschaltet, der sich in Richtung steigender Werte der physikalischen Grösse befindet, und die laufende Nummer k+1 des neuen Teilmessbereichs wird um einen Wert Eins grösser gewählt als die laufende Nummer k des gerade geltenden Teilmessbereichs. Im Fall z. B. des Messpunktes T, der auf der Geraden QR liegt und der die Koordinatenwerte $f[x_{k+1}]$ und $x_{k+1}$ besitzt, erfolgt eine Umschaltung vom geltenden Teilmessbereich mit der laufenden Nummer k auf den nächst höheren Teilmessbereich, der eine laufende Nummer k+1 aufweist, da der Wert der Differenz $\delta x$ positiv und grösser b ist. Der Anfangspunkt des Teils TW der Kennlinie des neuen Teilmessbereichs mit der laufenden Nummer k+1 ist dann der Messpunkt T, während sein Endpunkt, der in der Fig. 4 nicht mehr dargestellt ist, die Koordinatenwerte $f[x_{k+1}+a] \approx y[x_{k+1}]$ und $x_{k+1}+a$ aufweist.

Ist der Wert der Differenz $\delta x$ dagegen negativ, dann wird jeweils auf einen neuen benachbarten Teilmessbereich umgeschaltet, der sich in Richtung sinkender Werte der physikalischen Grösse befindet, und die laufende Nummer k-1 des neuen Teilmessbereichs wird um einen Wert Eins kleiner gewählt als die laufende Nummer k des gerade geltenden Teilmessbereichs, wobei k-1 immer grösser oder gleich Null sein muss.

In der Fig. 5 ist das Ausgangssignal f[x] des Sensors 1 für mehrere überlappend aneinandergereihte Teilmessbereiche in Funktion der Werte x der physikalischen Grösse dargestellt. Eine Gerade ACB ist derjenige Teil der Kennlinie des Sensors 1, der zum Teilmessbereich mit der laufenden Nummer k=0 gehört. Eine Gerade CED ist derjenige Teil der Kennlinie, der zum Teilmessbereich mit der laufenden Nummer k=1 gehört. Eine Gerade EQP gehört zu weiteren nicht näher beschriebenen Teilmessbereiche mit den laufenden Nummern k=2 bis k=k-1. Die Gerade QTR ist derjenige Teil der Kennlinie, der zum Teilmessbereich mit der laufenden Nummer k=k gehört. Die Gerade TW ist derjenige Teil der Kennlinie, der zum Teilmessbereich mit der laufenden Nummer k=k+1 gehört. Die Koordinaten der Anfangspunkte A, C, E, Q und T der erwähnten Teile der Kennlinie sind dabei jeweils $f[x_k]$ und $x_k$ und diejenigen der End-punkte B, D, P und R jeweils $f[x_k+a] \approx y[x_k]$ und $x_k+a$, wobei k jeweils den Wert der laufenden Nummer des zugehörigen Teilmessbereichs besitzt. Der Anfangspunkt A, der gleichzeitig der Anfangspunkt der gesamten Kennlinie ist, besitzt somit als Koordinatenwerte die Anfangswerte $f[x_o]$ und $x_o$, die zu Beginn der Verfahrens bereits bekannt sind und dann auch im Rechner 3 gespeichert werden. Die Anfangspunkte C, E, Q und T sind Messpunkte, die jeweils zu den Teilen der Kennlinie zweier benachbarter Teilmessbereiche gehören, nämlich zum Teilmessbereich mit der zugehörigen laufenden Nummer k und zum vorhergehenden Teilmessbereich mit der laufenden Nummer k-1.

Wenn in einem Teilmessbereich mit der laufenden Nummer k-1 einerseits eine positive Differenz $\delta x$ zwischen dem gerade ermittelten Wert der physikalischen Grösse und dem im geltenden Teilmessbereich vorhandenen niedrigsten Wert $x_{k-1}$ den vorgegebenen konstanten Wert b erreicht oder überschreitet und andererseits die laufende Nummer k des neuen Teilmessbereichs bisher im Verlaufe des Verfahrens noch nicht erreicht wurde, dann ist der neue Teilmessbereich ein Messbereich, dessen linearer Teil der Ausgangskennlinie bisher noch unbekannt war. Der Anfangspunkt der Ausgangskennlinie im neuen Teilmessbereich erhält dann als Koordinatenwerte den gerade ermittelten Wert $x_k$ der physikalischen Grösse und den dazugehörigen Wert des Ausgangssignals $f[x_k]$ des Sensors 1. Der Endpunkt der Ausgangskennlinie im neuen Teilmessbereich erhält seinerseits als Koordinatenwerte den durch den Sensor 1 ermittelten und um den Differenzwert a erhöhten Wert $x_k+a$ der physikalischen Grösse und den gerade anstehenden Wert des Ausgangssignals $y[x_k] \approx f[x_k+a]$ des Sensors 2.

Bei der Umschaltung von einem bekannten auf einen nächst höheren, noch unbekannten Teilmessbereich mit der laufenden Nummer k werden jeweils für den die Umschaltung auslösenden Wert $x_k$ der physikalischen Grösse der gerade anstehende Wert $f[x_k]$ des Ausgangssignals f[x] des Sensors 1 und für den Wert $x_k+a$ der physikalischen Grösse der gerade anstehende Wert $y[x_k]$) des Ausgangssignals y[x] des Sensors 2 ermittelt. Die beiden ermittelten Werte $f[x_k]$ und $y[x_k]$, der auslösende Wert $x_k$ der physikalischen Grösse sowie ein zugehöriger Wert von tg $\alpha_k=\{y[x_k]-f[x_k]\}/a$ werden jeweils unter der laufenden Nummer k des neuen Teilmessbereichs im Rechner 3 gespeichert.

Anschliessend wird der geltende Wert einer Variablen m um einen Wert Eins inkrementiert. Die Variable m gibt dabei den höchsten bisher im Verlaufe der Messungen erreichten Wert der laufenden Nummer k der Teilmessbereiche an.

Innerhalb eines bekannten Teilmessbereichs mit der laufenden Nummer k wird der zu einem gerade ermittelten Wert des Ausgangssignals f[x] des Sensors 1 gehörende Wert x der physikalischen Grösse durch den Rechner 3 ermittelt mittels der Formeln $\delta x=\{f[x]-f[x_k]\}/$tg $\alpha_k$ und $x=x_k+\delta x$.

Im ersten Teilmessbereich mit der laufenden Nummer k=0 sind der die Umschaltung auslösende Wert $x_k$ der physikalischen Grösse und der dazugehörige Wert $f[x_k]$ des Ausgangssignals f[x] des Sensors 1 die bekannten Koordinatenwerte $x_o$ und $f[x_o]$) des Anfangspunktes A der Ausgangskennlinie.

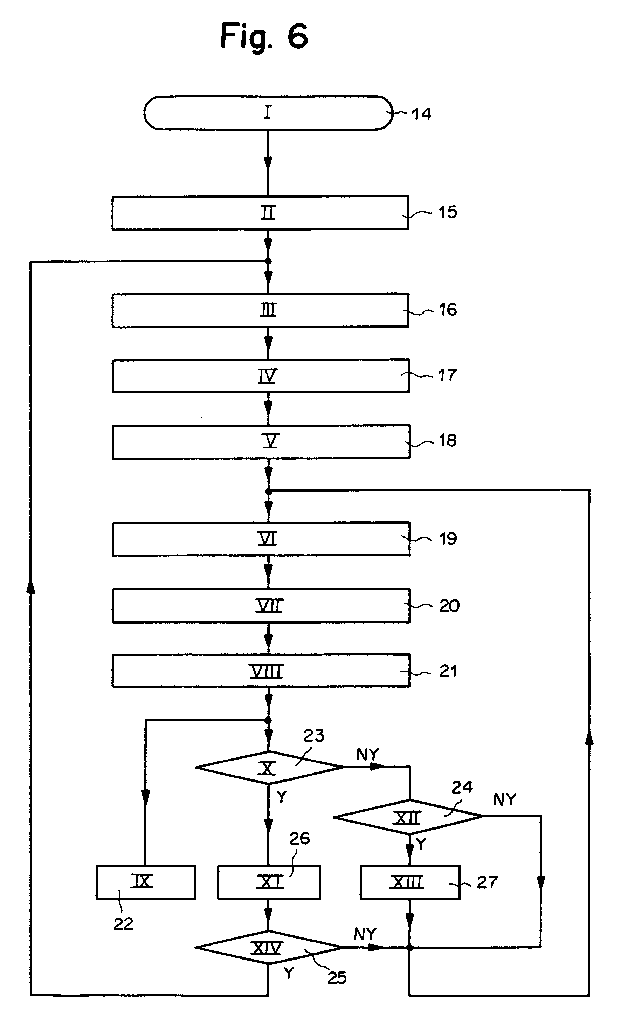

Das in der Fig. 6 dargestellte Flussdiagramm des Programms des Rechners 3 enthält neun Funktionsblöcke 14, 15, 16, 17, 18, 19, 20, 21 und 22, die in der angegebenen Reihenfolge in Kaskade geschaltet sind und die in der angegebenen Reihenfolge je eine der neun folgenden Funktionen I bis IX beinhalten:

Funktion I : "Start" und stelle aktiv den Wert von x auf den Wert $x_o$,

Funktion II : "Speichere die bekannten Anfangswerte $x=x_o$, k=0 und m=0 sowie die bekannten Werte a und b",

Funktion III: "Messe gleichzeitig und speichere anschliessend die Werte $f[x_k]$ und $y[x_k]$ der Ausgangs-Signale der beiden Sensoren 1 und 2 sowie den zugehörigen Wert $x=x_k$ der physikalischen Grösse",

Funktion IV : "Berechne und speichere den Wert tg $\alpha_k=\{y[x_k]-f[x_k]\}/a$",

Funktion V : "Inkrementiere den Wert der Variablen m um einen Wert Eins",

Funktion VI : "Messe und speichere den augenblicklichen Wert des Ausgangssignals f[x] des ersten Sensors 1",

Funktion VII: "Berechne und speichere den Wert von $\delta x=\{f[x]-f[x_k]\}/$tg $\alpha_k$",

5

Funktion VIII: "Berechne und speichere den Wert von x=$x_k$+$\delta$x" und

Funktion IX : "Zeige den berechneten Wert von x an".

Weiter sind in dem in der Fig. 6 dargestellten Flussdiagramm noch drei Entscheidungsblöcke 23, 24 und 25 sowie zwei Funktionsblöcke 26 und 27 vorhanden, die in der angegebenen Reihenfolge je eine der Funktionen X, XII, XIV, XI bzw. XIII beinhalten. In der Fig. 6 ist der Nein-Ausgang der Funktionsblöcke 23 bis 25 jeweils mit NY ("Not Yes) gekennzeichnet, während deren Ja-Ausgänge jeweils mit Y (Yes) gekennzeichnet sind.

Das Ausgangssignal des Funktionsblockes 21 speist ausser den Eingang des Funktionsblocks 22 noch den Eingang des Entscheidungsblocks 23, dessen Nein-Ausgang NY auf den Eingang des Entscheidungsblocks 24 geführt ist, während sein Ja-Ausgang Y über den Funktionsblock 26 mit dem Eingang des Entscheidungsblocks 25 verbunden ist. Der Ja-Ausgang Y des Entscheidungsblocks 24 ist auf den Eingang des Funktionsblocks 27 geführt, dessen Ausgang mit den Nein-Ausgängen NY der Entscheidungsblöcke 24 und 25 sowie mit dem Eingang des Funktionsblocks 19 verbunden ist. Der Ja-Ausgang Y des Entscheidungsblocks 25 ist mit dem Eingang des Funktions-blocks 16 verbunden.

Die Funktionen X bis XIV sind:

Funktion X: "Ist $\delta$x grösser oder gleich b",

Funktion XI: "Inkrementiere den Wert von k um einen Wert Eins",

Funktion XII: "Ist $\delta$x kleiner als Null",

Funktion XIII: "Dekrementiere den Wert von k um einen Wert Eins" und

Funktion XIV: "Ist der inkrementierte Wert von k grösser oder gleich dem geltenden Wert von m".

Die Funktionsblöcke 14 und 15 werden im Programm nur einmal zu Beginn des Verfahrens durchlaufen und dienen dazu, den Wert der physikalischen Grösse x aktiv auf den Wert $x_o$ zu stellen, z. B. durch ein Abschalten der zu messenden magnetischen Induktion oder durch ein Verschieben des beweglichen Körpers bis zum Kontakt mit dem mechanischen Anschlag 8, und die bereits anfänglich bekannten Werte von $x_o$, a und b im Rechner 3 zu speichern sowie die Werte von k und m auf Null zurückzustellen.

Die Funktionsblöcke 16 bis 18 werden zu Beginn eines jeden neuen, bisher unbekannten Teilmessbereichs durchlaufen, um mit Hilfe ermittelter Werte von $x_k$, f[$x_k$] und y[$x_k$] jeweils den neuen Wert tg $\alpha_k$ der Neigung des linearen Teils der Kennlinie im neuen, bisher unbekannten Teilmessbereich zu ermitteln. Für die einzelnen, noch unbekannten Teilmessbereiche wird somit im Verlauf des Verfahrens jeweils die Neigung tg $\alpha_k$ des zugehörigen linearen Teils der Ausgangskennlinie des Sensors 1 und damit für aneinandergereihte Teilmessbereiche der Verlauf der ganzen Ausgangskennlinie des Sensors 1 ermittelt. Nach der Berechnung des neuen Wertes von tg $\alpha_k$ wird dann jeweils der bisher geltende Wert von m um einen Wert Eins erhöht, da der neue Teilmessbereich jetzt nicht mehr unbekannt ist.

Die Funktions- bzw. Entscheidungsblöcke 19 bis 27 werden bei jeder Messung durchlaufen und dienen einerseits der Ermittlung der Werte von x und $\delta$x sowie anderseits der Kontrolle, ob der Wert der Differenz $\delta$x grösser oder gleich dem vorgegebenen Wert b oder kleiner als Null ist. Wenn nein, dann erfolgt keine Umschaltung eines Teilmessbereichs. Wenn ja, dann erfolgt eine Umschaltung von dem geltenden Teilmessbereich auf einen höheren oder niedrigeren Teilmessbereich durch eine Inkrementierung bzw. Dekrementierung des geltenden Wertes von k um einen Wert Eins. Ist ein inkrementierter Wert von k ausserdem grösser als der geltende Wert von m oder gleich diesem Wert, dann ist der neue Teilmessbereich ein noch unbekannter Teilmessbereich und das Programm kehrt zur Ermittlung von dessen bisher noch unbekannten Wert von tg $\alpha_k$ zum Eingang des Funktionsblocks 16 zurück. In allen anderen Fällen erfolgt dagegen entweder eine Umschaltung auf einen bekannten Teilmessbereich oder keine Umschaltung eines Teilmessbereichs und das Programm kehrt zum Eingang des Funktionsblocks 19 zurück, wo es dann für eine weitere Messung zur Verfügung steht.

Nachfolgend wird der Programmdurchlauf in Gruppen von Programmdurchläufen unterteilt, wobei zu jeder Gruppe jeweils solche aufeinanderfolgenden Messungen gehören, deren Messresultate alle in einem gleichen Teilmessbereich mit einer laufenden Nummer k liegen. In einem ersten Durchlauf einer jeden Gruppe wird dabei jeweils zuerst mit Hilfe der Messresultate des Sensors 2 der zugehörige Teil der Ausgangskennlinie des Sensors 1 ermittelt.

Das erfindungsgemässe Verfahren verläuft gemäss Fig. 6 dann folgendermassen:

- In einer ersten Gruppe von Programmdurchläufen, die zu Messungen gehören, deren Messresultate alle in einem Teilmessbereich mit der laufenden Nummer k=0 liegen, erfolgen folgende Funktionsabläufe:

Nach der Speicherung der Werte von a und b sowie der Werte x=$x_o$, k=0 und m=0 im Rechner 3 (siehe Funktionsblock 15), werden die zum Anfangswert x=$x_o$ der physikalischen Grösse gehörenden Werte f[$x_o$] und y[$x_o$] der Ausgangssignale der beiden Sensoren 1 und 2 ermittelt und im Rechner 3 unter der laufenden Nummer k=0 gespeichert (siehe Funktionsblock 16). Da die beiden Kennlinien f[x] und g[x] der Sensoren 1 und 2 annähernd gleich sind, liegen die beiden so gefundenen Messpunkte A und

6

B (siehe Fig. 5) mit den Koordinatenwerten $f[x_o],x_o$ und $y[x_o] \approx f[x_o+a],x_o+a$ im geltenden Teilmessbereich auf der Ausgangskennlinie des Sensors 1, die zwischen den beiden Werten $x_o$ und $x_o+a$ der Abszisse, wie bereits erwähnt, als linear verlaufend angenommen wird.

Da die Koordinatenwerte der beiden auf diesen linearen Teil der Ausgangskennlinie liegenden Messpunkte A und B bekannt sind, kann der zu diesem Teil der Ausgangskennlinie gehörende Wert tg $\alpha_k=$tg $\alpha_o=\{y[x_o]-f[x_o]\}/a$ der Neigung mittels des Rechners 3 berechnet und im ihm unter der laufenden Nummer k=0 gespeichert werden (siehe Funktionsblock 17). Anschliessend wird der geltende Wert von m um einen Wert Eins inkrementiert (siehe Funktionsblock 18).

Da für die erste Messung $f[x]=f[x_k]=f[x_o]$ gelten, sind im Augenblick die Funktions- und Entscheidungsblöcke 19 bis 27 bedeutungslos, da $\delta x=0$ und $x=x_k=x_o$. Mit anderen Worten: Das Programm durchläuft zwar bei der ersten Messung die Funktions- und Entscheidungsblöcke 19 bis 27, es kehrt jedoch ohne Umschaltung eines Teilmessbereichs zum Eingang des Funktionsblocks 19 zurück, um die nächste Messung auszulösen.

Da die Koordinatenwerte $f[x_o],x_o$ des Anfangspunktes A und der Wert von $tg\alpha_o$ für den geltenden Teilmessbereich mit der laufenden Nummer k=0 bekannt sind, können in diesem Teilmessbereich die Abszissenwerte eines jeden Zwischenpunktes $F_k=F_o$ der Ausgangskennlinie des Sensors 1 zwischen den Messpunkten A und B mittels der Formeln

$$x = x_o + \delta x \quad \text{(I)}$$

und

$$\delta x = \{f[x] - f[x_o]\}/\text{tg } \alpha_o \quad \text{(II)}$$

durch den Rechner 3 berechnet werden (siehe die Funktionsblöcke 19 bis 21), wobei $f[x]$ und $x$ die Koordinatenwerte des Zwischenpunktes $F_k=F_o$ sind (siehe Fig. 4). Der Teil AB der Ausgangskennlinie des Sensors 1 und damit der zugehörige Teilmessbereich sind somit bekannt.

Solange bei den nachfolgenden Messungen die ermittelten Werte von $\delta x$ grösser oder gleich Null aber kleiner als der vorgegebene Wert b sind, findet keine Umschaltung eines Teilmessbereichs statt (siehe die Entscheidungsblöcke 23 und 24) und der gesuchte Wert von x wird jeweils für alle Messungen durch den Rechner 3 mittels der Formeln I und II berechnet. Für eine jede dieser Messungen werden dabei die Funktions- bzw. Entscheidungsblöcke 19 bis 27 einmal durchlaufen.

- In einer nachfolgenden zweiten Gruppe von Programmdurchläufen, die zu Messungen gehören, deren Messresultate alle in einem Teilmessbereich mit der laufenden Nummer k=1 liegen, erfolgen folgende Funktionsabläufe:

Am Ende einer jeden Messung wird jeweils kontrolliert, ob der neu gefundene Wert von $\delta x$ kleiner als Null oder grösser oder gleich b ist (siehe Funktions- und Entscheidungsblöcke 23 und 24). Wenn dies das erste Mal für einen Messwert $x=x_k=x_1$ mit einem positiven Wert von $\delta x$ der Fall ist, dann erfolgt eine erste Umschaltung vom einem geltenden Teilmessbereich mit der laufenden Nummer k=0 auf einen benachbarten, nächst höheren Teilmessbereich mit der laufenden Nummer k=1 (siehe Funktionsblock 26). Wenn der neue Teilmessbereich noch unbekannt ist, dann ist die laufende Nummer k=1 des neuen Teilmessbereichs grösser oder gleich m (siehe Entscheidungsblock 25). In diesem Falle kehrt das Programm zum Eingang des Funktionsblocks 16 zurück und ermittelt mit Hilfe des gerade anstehenden Messresultates des Sensors 2 einen neuen Wert von tg $\alpha_k=$ tg $\alpha_1$ des nun im neuen Teilmessbereich geltenden linearen Teils CD der Ausgangskennlinie des Sensors 1 (siehe Funktionsblock 17 sowie Fig. 5).

Mit k=1 gilt dabei folgende Formel:

$$\text{tg } \alpha_k = \{y[x_k] - f[x_k]\}/a \quad \text{(III)}.$$

Anschiessend wird der geltende Wert von m wieder um einen Wert Eins inkrementiert (siehe Funktionsblock 18).

Da die Koordinatenwerte $f[x_1],x_1$ des Anfangspunktes C und der Wert von $tg\alpha_1$ der Neigung für den geltenden Teilmessbereich mit der laufenden Nummer k=1 nun bekannt sind, kann in diesem Teilmessbereich jeder Zwischenpunkt $F_k=F_1$ der Ausgangskennlinie des Sensors 1 zwischen den Messpunkten C und D mittels der Formeln

$$x = x_k + \delta x \quad \text{(IV)}$$

und

$$\delta x = \{f[x] - f[x_k]\}/\text{tg } \alpha_k \quad \text{(V)}$$

durch den Rechner 3 für k=1 berechnet werden (siehe die Funktionsblöcke 19 bis 21), wobei $f[x]$ und $x$ wieder die Koordinatenwerte des Zwischenpunktes $F_k$ sind (siehe Fig. 4). Der Teil CD der Ausgangskennlinie des Sensors 1 und damit der zugehörige Teilmessbereich sind somit neuerdings bekannt. Der bisher bekannte Teil AB der Ausgangskennlinie des Sensors 1 wurde somit um den Teil CD nach oben hin erweitert.

Solange bei den nachfolgenden Messungen die neu ermittelten Werte von $\delta x$ positiv und kleiner als der vorbegebene Wert b sind, findet wieder keine neue Umschaltung eines Teilmessbereichs statt (siehe die Entscheidungsblöcke 23 und 24) und der gesuchte Wert von x wird jeweils durch den Rechner 3 mittels der Formeln IV und V berechnet. Für eine jede dieser Messungen werden dabei wieder die Funktions- und Entscheidungsblöcke 19 bis 27 einmal durchlaufen.

- In nachfolgenden weiteren Gruppen von Programmdurchläufen, die zu Messungen gehören, deren Messresultate alle in einem Teilmessbereich mit einer laufenden Nummer k liegen, erfolgen jeweils folgende Funktionsabläufe (siehe auch Fig. 4 und Fig. 5):

Am Ende einer jeden Messung in einem Teilmessbereich mit der laufenden Nummer k-1 wird immer jeweils kontrolliert, ob der neu gefundene Wert von $\delta x$ kleiner Null oder grösser oder gleich b ist (siehe Entscheidungsblöcke 23 und 24). Wenn dies das erste Mal für einen Messwert $x=x_k$ mit einem positiven Wert von $\delta x$ der Fall ist, dann erfolgt eine Umschaltung vom geltenden Teilmessbereich auf einen benachbarten, nächst höheren Teilmessbereich mit der laufenden Nummer k durch Inkrementierung der laufenden Nummer k um einen Wert Eins (siehe Funktionsblock 26). Ist die neue laufende Nummer k grösser oder gleich m (siehe Entscheidungsblock 25), dann ist der neue Teilmessbereich immer ein noch unbekannter Teilmessbereich und das Programm kehrt zum Eingang des Funktionsblocks 16 zurück, um mit Hilfe des gerade anstehenden Messresultates des Sensors 2 den Wert von tg $\alpha_k$ für den neuen Teilmessbereich zu ermitteln (siehe Funktionsblock 17) unter anschliessender Inkrementierung des Wertes von m um einen Wert Eins (siehe Funktionsblock 18). Wenn der Wert von $\delta x$ negativ ist, dann erfolgt eine Umschaltung vom geltenden Teilmessbereich auf einen benachbarten nächst niedrigeren Teilmessbereich, der bereits bekannt ist, durch eine Dekrementierung der laufenden Nummer des geltenden Teilmessbereichs um einen Wert Eins (siehe Funktionsblock 27).

Ist die Ausgangskennlinie der Sensoren 1 und 2 unstabil, dann muss zur Nacheichung der Ausgangskennlinie das beschriebene Verfahren von Zeit zu Zeit, z. B. periodisch, erneut durchlaufen werden, indem im Programm des Rechners 3 z. B. ein neuer "Start" erzeugt wird.

## Patentansprüche

1. Verfahren zur selbsttätigen Eichung oder Nacheichung von Messungen einer physikalischen Grösse mit einem ersten Sensor (1) und einem zweiten Sensor (2), die beide Werte (x) der physikalischen Grösse ermitteln und deren beider Ausgangskennlinien (f[x], g[x]) in Funktion der als Abszissenwerte aufgetragenen Werte (x) der physikalischen Grösse einen gleichen, jedoch zu Beginn unbekannten Verlauf besitzen, und einem Rechner (3) zur Auswertung der Ausgangssignale (f[x], y[x]=g[x+a]) der beiden Sensoren (1, 2), dadurch gekennzeichnet, dass mindestens die Ausgangskennlinie des ersten Sensors (1) in Teilmessbereichen unterteilt wird, dass die durch die beiden Sensoren (1, 2) gleichzeitig ermittelten Werte (x, x+a) der physikalischen Grösse sich durch einen vorgegebenen konstanten Differenzwert (a) der physikalischen Grösse voneinander unterscheiden, dass die in Richtung der Abszissenwerte gemessene Breite der Teilmessbereiche gleich gross gewählt wird wie der vorgegebene konstante Differenzwert (a) der physikalischen Grösse, dass mit Hilfe von Messresultaten des zweiten Sensors (2) im Verlaufe des Verfahrens, ausgehend von bekannten Koordinatenwerten (f[$x_o$],$x_o$) eines Anfangspunktes (A) der Ausgangskennlinie des ersten Sensors (1), ein bekannter Teil der Ausgangskennlinie des ersten Sensors (1) in Richtung steigender Werte der physikalischen Grösse durch neue, bekannte Teilmessbereiche immer mehr erweitert wird, wobei zwei benachbarte bekannte Teilmessbereiche sich jeweils mindestens für einen Abszissenwert ($x_k$) überlappen, und dass der gesuchte Wert (x) der physikalischen Grösse durch den ersten Sensor (1) immer nur in solchen Teilmessbereichen seiner Ausgangskennlinie ermittelt wird, in denen die Werte der Ausgangskennlinie bereits mit Hilfe der Messresultate des zweiten Sensors (2) ermittelt wurden.

2. Verfahren nach Anspruch 1, dadurch gekennzeichnet, dass der bekannte vorgegebene Differenzwert (a) der physikalischen Grösse so klein gewählt wird, dass innerhalb eines jeden Teilmessbereichs der zugehörige Teil der Ausgangskennlinie des ersten Sensors (1) jeweils als linear verlaufend angenommen werden kann, und dass für die Teilmessbereiche jeweils die Neigung (tg $\alpha_k$) des zugehörigen linearen Teils der Ausgangskennlinie des ersten Sensors (1) und damit, im Verlaufe des Verfahrens, für aneinandergereihte Teilmessbereiche der Verlauf der ganzen Ausgangskennlinie des ersten Sensors (1) ermittelt wird.

3. Verfahren nach Anspruch 1 oder 2, dadurch gekennzeichnet, dass die Teilmessbereiche mit laufenden Nummern (k) versehen werden und die Umschaltung von einem gerade geltenden Teilmessbereich auf einen benachbarten Teilmessbereich immer dann erfolgt, wenn der Wert der Differenz ($\delta$x) zwischen einem gerade ermittelten Wert der gesuchten physikalischen Grösse und derem im geltenden Teilmessbereich (k) vorhandener niedrigster Wert ($x_k$) kleiner als Null ist oder einen vorgegebenen konstanten Wert (b) erreicht oder überschreitet, der kleiner ist als der vorgegebene konstante Differenzwert (a) der physikalischen Grösse.

4. Verfahren nach Anspruch 3, dadurch gekennzeichnet, dass, wenn ein Wert der Differenz ($\delta$x) zwischen dem gerade ermittelten Wert der physikalischen Grösse und derem im geltenden Teilmessbereich (k) vorhandener niedrigster Wert ($x_k$) positiv und grösser oder gleich dem vorgegebenen konstanten Wert (b) ist, auf einen neuen benachbarten Teilmessbereich umgeschaltet wird, der sich in Richtung steigender Werte der physikalischen Grösse befindet, und die laufende Nummer (k+1) des neuen Teilmessbereichs um einen Wert Eins grösser gewählt wird als die laufende Nummer (k) des gerade geltenden Teilmesbereichs und dass, wenn ein Wert der Differenz ($\delta$x) zwischen dem gerade ermittelten Wert der physikalischen Grösse und derem im geltenden Teilmessbereich vorhandener niedrigster Wert ($x_k$) negativ ist, auf einen neuen benachbarten Teilmessbereich umgeschaltet wird, der sich in Richtung sinkender Werte der physikalischen Grösse befindet, und die laufende Nummer (k-1) des neuen Teilmessbereichs um einen Wert Eins kleiner gewählt wird als die laufende Nummer (k) des gerade geltenden Teilmessbereichs.

5. Verfahren nach Anspruch 4, dadurch gekennzeichnet, dass, wenn einerseits eine positive Differenz ($\delta$x) zwischen dem gerade ermittelten Wert der physikalischen Grösse und derem im geltenden Teilmessbereich (k-1) vorhandener niedrigster Wert ($x_{k-1}$) den vorgegebenen konstanten Wert (b) erreicht oder überschreitet und andererseits die laufende Nummer (k) des neuen Teilmessbereichs bisher im Verlaufe des Verfahrens noch nicht erreicht wurde, der neue Teilmessbereich ein Messbereich ist, dessen linearer Teil der Ausgangskennlinie bisher noch unbekannt war, dass der Anfangspunkt der Ausgangskennlinie im neuen Teilmessbereich als Koordinatenwerte den gerade ermittelten Wert ($x_k$) der physikalischen Grösse und den dazugehörigen Wert des Ausgangssignals ($f[x_k]$) des ersten Sensors (1) erhält und dass der Endpunkt der Ausgangskennlinie im neuen Teilmessbereich als Koordinatenwerte den durch den ersten Sensor (1) ermittelten und um den vorgegebenen konstanten Differenzwert (a) erhöhten Wert ($x_k$+a) der physikalischen Grösse und den Wert des gerade am zweiten Sensor (2) anstehenden Ausgangssignals ($y[x_k] \approx f[x_k+a]$) erhält.

6. Verfahren nach Anspruch 5, dadurch gekennzeichnet, dass bei der Umschaltung von einem bekannten auf einen nächst höheren, noch unbekannten Teilmessbereich mit der laufenden Nummer k jeweils für den die Umschaltung auslösenden Wert $x_k$ der physikalischen Grösse der gerade anstehende Wert $f[x_k]$ des Ausgangssignals ($f[x]$) des ersten Sensors (1) und der gerade anstehende Wert $g[x_k+a]$ des Ausgangssignals ($y[x]$) des zweiten Sensors (2) ermittelt werden, wobei a der vorgegebene konstante Differenzwert der physikalischen Grösse ist, und dass die beiden ermittelten Werte $f[x_k]$ und $g[x_k+a]$, der auslösende Wert $x_k$ der physikalischen Grösse sowie ein zugehöriger Wert von tg $\alpha_k = \{g[x_k+a]-[x_k]\}/a$ unter der laufenden Nummer k des neuen Teilmessbereichs im Rechner (3) gespeichert werden, verbunden mit einem Inkrementieren um einen Wert Eins einer Variablen (m), die den höchsten bisher im Verlaufe des Verfahrens erreichten Wert der laufenden Nummer (k) der Teilmessbereiche angibt.

7. Verfahren nach Anspruch 6, dadurch gekennzeichnet, dass im ersten Teilmessbereich mit der laufenden Nummer k=0 der die Umschaltung auslösende Wert $x_k$ der physikalischen Grösse und der dazugehörige Wert $f[x_k]$ des Ausgangssignals ($f[x]$) des ersten Sensors (1) die bekannten Koordinatenwerte ($x_o$, $f[x_o]$) des Anfangspunktes der Ausgangskennlinie sind.

8. Verfahren nach Anspruch 6 oder 7, dadurch gekennzeichnet, dass innerhalb eines bekannten Teilmessbereichs mit der laufenden Nummer k der zu einem gerade ermittelten Wert des Ausgangssignals $f[x]$ des ersten Sensors (1) gehörende Wert x der physikalischen Grösse durch den Rechner (3) ermittelt wird mittels der Formeln $\delta x = \{f[x]-f[x_k]\}/tg\ \alpha_k$ und $x = x_k + \delta x$.

## Claims

1. A method for automatic calibration or recalibration of measurements of a physical variable with a first sensor (1) and a second sensor (2) which both ascertain values (x) of the physical variable and whose two output characteristics ($f[x]$, $g[x]$), as a function of the values of the physical variable which are plotted as abscissa values, have an identical but initially unknown path, and a coputer (3) for evaluating the output signals (f[x], y[x]=g[x+a]) of the two sensors (1, 2), characterised in that at least the output characteristic of the first sensor (1) is subdivided into partial measurement ranges, that the values (x, x+a) of the physical variable which are simultaneously ascertained by the two sensors (1, 2) differ from each other by a predetermined constant differential value (a) of the physical variable, that the width of the partial measurement ranges, as measured in the direction of the abscissa values, is selected so that it is equal in magnitude to the predetermined constant differential value (a) of the physical variable, that by means of the measurement results of the second sensor (2) in the course of the method, and starting from known co-ordinate values ($f[x_o]$, $x_o$) of an origin (A) of the output characteristic of the first sensor (1), a known part of the output characteristic of the first sensor (1) is increasingly expanded in the direction of increasing values of the physical variable by new known partial measurement ranges, wherein each two adjacent known partial measurement ranges overlap at least for one abscissa value ($x_k$), and that the value (x) being sought of the physical variable is only ever ascertained by the first sensor (1) in those partial measurement ranges of its output characteristic, in which the values of the output characteristic have already been ascertained by means of the measurement results of the second sensor (2).

2. A method according to claim 1 characterised in that the known predetermined differential value (a) of the physical variable is selected so small that within each partial measurement range the associated part of the output characteristic of the first sensor (1) can respectively be assumed to be linear and that for the respective partial measurement ranges the slope (tg $\alpha_k$) of the associated linear part of the output characteristic of the first sensor (1) is ascertained and thus in the course of the method, for successive partial measurement ranges, the path of the entire output characteristic of the first sensor (1) is ascertained.

3. A method according to claim 1 or claim 2 characterised in that the partial measurement ranges are provided with serial numbers (k) and switching over from a partial measurement range which applies at that time to an adjacent partial measurement range occurs whenever the value of the difference ($\delta x$) between a value, which has just been ascertained, of the physical variable being sought, and its lowest value ($x_k$) in the prevailing partial measurement range (k) is less than zero or reaches or exceeds a predetermined constant value (b) which is less than the predetermined constant differential value (a) of the physical variable.

4. A method according to claim 3 characterised in that, if a value of the difference ($\delta x$) between the value, which has just been ascertained, of the physical variable and its lowest value ($x_k$) in the prevailing partial measurement range (k) is positive and greater than or equal to the predetermined constant value (b), the procedure is switched over to a new adjacent partial measurement range which is in the direction of increasing values of the physical variable, and the serial number (k+1) of the new partial measurement range is selected to be greater by a value of one than the serial number (k) of the partial measurement range which applies at that time, and that, if a value of the difference ($\delta x$) between the value, which has just been ascertained, of the physical variable and its lowest value ($x_k$) in the prevailing partial measurement range is negative, the procedure is switched over to a new adjacent partial measurement range which is in the direction of decreasing values of the physical variable, and the serial number (k-1) of the new partial measurement range is selected to be smaller by a value of one than the serial number (k) of the partial measurement range which applies at that time.

5. A method according to claim 4 characterised in that, if on the one hand a positive difference ($\delta x$) between the value, which has just been ascertained, of the physical variable and its lowest value ($X_{k-1}$) in the prevailing partial measurement range (k-1) reaches or exceeds the predetermined constant value (b) and on the other hand the serial number (k) of the new partial measurement range has hitherto not yet been reached in the course of the method, the new partial measurement range is a measurement range whose linear part of the output characteristic was hitherto still unknown, that the origin of the output characteristic in the new partial measurement range has, as coordinate values, the value ($x_k$), which has just been ascertained, of the physical variable and the associated value of the output signal ($f[x_k]$) of the first sensor (1), and that the end point of the output characteristic in the new partial measurement range has, as co-ordinate values, the value ($x_k$+a), which is ascertained by the first sensor (1) and increased by the predetermined constant differential value (a), of the physical variable and the value of the output signal ($y[x_k]\approx f[x_k+a]$) which obtains at that time at the second sensor (2).

6. A method according to claim 5 characterised in that when the procedure switches over from a known par-

EP 0 451 330 B1

tial measurement range to a next higher, still unknown partial measurement range with the serial number k, for the respective value $x_k$ of the physical variable, which initiates the switching-over operation, the value $f[x_k]$, which obtains at that time, of the output signal (f[x]) of the first sensor and the value $g[x_k+a]$, which obtains at that time, of the output signal (y[x]) of the second sensor (2) are ascertained, wherein a is the predetermined constant differential value of the physical variable, and that the two ascertained values $f[x_k]$ and $g[x_k+a]$, the initiating value $x_k$ of the physical variable and an associated value of tg $\alpha_k=\{g[x_k+a]-f[x_k]\}/a$ are stored in the computer under the serial number k of the new partial measurement range, combined with incrementing by a value of one of a variable (m) which gives the highest value reached hitherto in the course of the method for the serial number (k) of the partial measurement ranges.

7. A method according to claim 6 characterised in that in the first partial measurement range with the serial number k=0 the value $x_k$ of the physical variable which initiates the switching-over operation and the associated value $f[x_k]$ of the output signal (f[x]) of the first sensor (1) are the known coordinate values ($x_o$, $f[x_o]$) of the origin of the output characteristic.

8. A method according to claim 6 or claim 7 characterised in that within a known partial measurement range with the serial number k the value x of the physical variable, which value is associated with a value that has just been ascertained of the output signal f[x] of the first sensor (1), is ascertained by the computer (3) by means of the formulae $\delta x=\{f[x]-f[x_k]\}$ /tg $\alpha_k$ and and $x=x_k+\delta x$.

**Revendications**

1. Procédé de calibrage ou de recalibrage automatique de mesures d'une grandeur physique, utilisant un premier capteur (1) et un second capteur (2), qui tous deux déterminent des valeurs (x) de la grandeur physique et dont les deux courbes caractéristiques de sortie (f[x], g[x]) possèdent, en fonction des valeurs (x) de la grandeur physique, rapportées à des valeurs en abscisses, une allure identique, mais inconnue au départ, et un ordinateur (3) servant à évaluer les signaux de sortie (f[x], y[x] = g[x+a]) des deux capteurs (1,2), caractérisé en ce qu'au moins la courbe caractéristique de sortie du premier capteur (1) est subdivisée en gammes de mesure partielles, que les valeurs (x, x+a) de la grandeur physique, déterminées simultanément par les deux capteurs (1,2), diffèrent l'une de l'autre, d'une valeur de différence constante prédéterminée (a) de la grandeur physique, que la largeur des gammes de mesure partielles, mesurée dans la direction des valeurs des abscisses, est choisie égale à la valeur de différence constante prédéterminée (a) de la grandeur physique, qu'à l'aide de résultats de mesure du second capteur (2) au cours du procédé, à partir des valeurs de coordonnées connues (f[$x_0$], $x_0$ d'un point de départ (A) de la courbe caractéristique de sortie du premier capteur (1), une partie connue de la courbe caractéristique de sortie du premier capteur (1) est de plus en plus étendue, en direction de valeurs croissantes de la grandeur physique, par de nouvelles gammes de mesure partielles connues, auquel cas deux gammes de mesure partielles connues voisines se chevauchent respectivement au moins pour une valeur d'abscisse ($x_k$), et que la valeur recherchée (x) de la grandeur physique est déterminée par le premier capteur (1) en permanence uniquement dans des gammes de mesure partielles de sa courbe caractéristique de sortie, dans lesquelles les valeurs de la courbe caractéristique de sortie ont déjà été déterminées à l'aide des résultats de mesure du second capteur (2).

2. Procédé selon la revendication 1, caractérisé en ce que la valeur de différence prédéterminée connue (a) de la grandeur physique est choisie suffisamment faible pour qu'à l'intérieur de chaque gamme de mesure partielle, la partie associée de la courbe caractéristique de sortie du premier capteur (1) puisse être supposée comme étant respectivement linéaire, et que pour les gammes de mesure partielles, respectivement l'inclinaison (tg $a_k$) de la partie linéaire associée de la courbe caractéristique de sortie du premier capteur (1) et que, par conséquent, lors de la mise en oeuvre du procédé, l'allure de l'ensemble de la courbe caractéristique de sortie du premier capteur (1) est déterminée pour des gammes de mesure partielles successives,.

3. Procédé selon la revendication 1 ou 2, caractérisé en ce que les gammes de mesure partielles sont désignées par des numéros d'ordre (k) et que la commutation d'une gamme de mesure partielle précisément valable sur une gamme de mesure partielle voisine se produit chaque fois que la valeur de la différence ($\delta x$) entre une valeur précisément déterminée de la grandeur physique recherchée et la valeur la plus faible ($x_k$) présente dans la gamme de mesure partielle (k) valable, est inférieure à zéro ou atteint ou dépasse

11

une valeur constante prédéterminée (b), qui est inférieure à la valeur de différence constante prédéterminée (a) de la grandeur physique.

4. Procédé suivant la revendication 3, caractérisé par le fait que, lorsqu'une valeur de la différence ($\delta x$) entre la valeur précisément déterminée de la grandeur physique et sa valeur minimale ($x_k$), présente dans la gamme de mesure partielle valable (k), est positive et supérieure ou égale à la valeur constante prédéterminée (b), une commutation est exécutée sur une nouvelle gamme de mesure partielle voisine qui se situe dans la direction de valeurs croissantes de la grandeur physique, et le numéro d'ordre (k+1) de la nouvelle gamme de mesure partielle est choisi supérieur, d'une valeur un, au numéro d'ordre (k) de la gamme de mesure partielle précisément valable et que, lorsqu'une valeur de la différence ($\delta x$) entre la valeur précisément déterminée de la grandeur physique et sa valeur minimale ($x_k$) présente dans la gamme de mesure partielle valable est négative, une commutation est exécutée sur une nouvelle gamme de mesure partielle voisine, qui est située dans la direction de valeurs décroissantes de la grandeur physique, et que le numéro d'ordre (k-1) de la nouvelle gamme de mesure partielle est choisi inférieur, d'une valeur un, au numéro d'ordre (k) de la gamme de mesure partielle précisément valable.

5. Procédé suivant la revendication 4, caractérisé par le fait que, lorsque d'une part une différence positive ($\delta x$) entre la valeur précisément déterminée de la grandeur physique et sa valeur minimale ($x_{k-1}$) présente dans la gamme de mesure partielle valable (k-1) atteint ou dépasse la valeur constante prédéterminée (b) et que d'autre part le numéro d'ordre (k) de la nouvelle gamme de mesure partielle n'a pas encore été atteint jusqu'alors lors de la mise en oeuvre du procédé, la nouvelle gamme de mesure partielle est une gamme de mesure, dont la partie linéaire de la courbe caractéristique de sortie était jusqu'alors encore inconnue, que le point de départ de la courbe caractéristique de sortie dans la nouvelle gamme de mesure partielle reçoit, en tant que valeurs de coordonnées, la valeur précisément déterminée ($x_k$) de la grandeur physique et la valeur, qui lui est associée, du signal de sortie ($f[x_k]$) du premier capteur (1) et que le point d'extrémité de la courbe caractéristique de sortie dans la nouvelle gamme de mesure partielle reçoit, en tant que valeurs de coordonnées, la valeur ($x_k+a$) de la grandeur physique, qui est déterminée par le premier capteur (1) et est accrue de la valeur de différence constante prédéterminée (a), et la valeur du signal de sortie ($y[x_k] \approx f[x_k+a]$), présente précisément dans le second capteur.

6. Procédé selon la revendication 5, caractérisé en ce que, lors de la commutation d'une gamme de mesure partielle connue à une gamme de mesure partielle immédiatement supérieure, encore inconnue, possédant le numéro d'ordre k, on détermine, respectivement pour la valeur $x_k$ de la grandeur physique, qui déclenche la commutation, la valeur précisément présente $f[x_k]$ du signal de sortie ($f[x]$) du premier capteur (1) et la valeur précisément présente ($g[x_k+a]$ du signal de sortie ($y[x]$) du second capteur (2), a étant la valeur de différence constante prédéterminée de la grandeur physique, et que les deux valeurs déterminées $f[x_k]$ et $g[x_k+a]$, la valeur de déclenchement $x_k$ de la grandeur physique ainsi qu'une valeur associée de tg $\alpha_k = \{g[x_k+a]-f[x_k]\}/a$ est mémorisée sous le numéro d'ordre k de la nouvelle gamme de mesure partielle dans l'ordinateur (3), d'une manière associée à une incrémentation, d'une valeur un, d'une variable (m), qui indique la valeur maximale atteinte jusqu'alors au cours de la mise en oeuvre du procédé et portant le numéro d'ordre (k) des gammes de mesure partielles.

7. Procédé selon la revendication 6, caractérisé en ce que dans la première gamme de mesure partielle possédant le numéro d'ordre k=0, la valeur $x_k$ de la valeur physique, qui déclenche la commutation, et la valeur $f[x_k]$, qui y est associée, du signal de sortie ($f[x]$) du premier capteur (1) sont les valeurs de coordonnées connues ($x_0$, $f[x_0]$) du point de départ de courbes caractéristiques de sortie.

8. Procédé selon la revendication 6 ou 7, caractérisé en ce qu'à l'intérieur d'une gamme de mesure partielle connue possédant le numéro d'ordre k, la valeur x de la grandeur physique, qui est associée à une valeur précisément déterminée du signal de sortie $f[x]$ du premier capteur (1), est déterminée par l'ordinateur (3) conformément aux formules $\delta x=\{f[x]-f[x_k]\}/tg\ \alpha_k$ et $x=x_k+\delta x$.

EP 0 451 330 B1

Fig. 1

Fig. 2

13

# Fig. 3

f[B]

B

1

$\vec{B}$

B+a

y[B]

N    S

2

3    B

4

14

a

$B_0$

a

B

5

# Fig. 4

f[x]

R

$f[x_k+a] \simeq y[x_k]$

$f[x_{k+1}]$

T    W

f[x]

$F_k$

$f[x_k]$

$\delta_k$

Q

$x_k$    x    $x_{k+1}$    $x_k+a$    x

$\delta x$

b

a

14

# Fig.5

# Fig. 6